# EUROPEAN PATENT SPECIFICATION

(11) **EP 0 487 478 B1**
(45) Date of publication and mention of the grant of the patent: **12.04.1995**
(21) Application number: 91850284.0
(22) Date of filing: 19.11.1991
(51) Int. Cl.: B23B 27/16

(54) **Cutting tool**
Schneidwerkzeug
Outil de coupe

(30) Priority: 21.11.1990 SE 9003705
(43) Date of publication of application: 27.05.1992
(73) Proprietor: SECO TOOLS AB, S-737 82 Fagersta (SE)
(72) Inventor: Forsberg, Karl-Erik, S-773 00 Fagersta (SE); Jansson, Mikael, S-774 67 Avesta (SE)
(74) Representative: Eriksson, Kjell

(56) References cited:
- EP-A- 0 179 033
- EP-A- 0 275 793
- DE-A- 1 948 160

## Description

The present invention refers to a cutting tool for chip removing machining, said cutting tool including a holder body with a cutting insert receiving site including a base surface and side supporting means, a cutting insert located in said cutting insert receiving site and supported by said base surface and said side supporting means, a locking pin, means for detachably connecting the locking pin to the holder body in the area of the cutting insert receiving site, said means allowing axial displacement of the locking pin relative to the holder body, said locking pin having a longitudinal centre axis diverging away from said side supporting means as it progresses upwardly, said cutting insert having a fixing hole extending through the insert, said locking pin having a head, the design of said head and said fixing hole and the inclination of the longitudinal centre axis being so mutually adapted to each other that, in an active position of the locking pin, a lower contact portion of said head engaging the inner portion of the fixing hole and an upper contact portion of said head engaging the outer portion of the fixing hole, said contact portions being located on opposite sides of the head of the locking pin, and that in an inactive position of the locking pin, i.e. the locking pin being displaced axially away from the base surface a limited distance, the cutting insert can be mounted in/removed from the cutting insert receiving site, the fixing hole having at least in the areas of contact between the locking pin and the cutting insert, a decreasing cross-sectional area in direction towards the base surface in mounted position of the cutting insert in the cutting insert receiving site.

Cutting tools of the above-mentioned type are previously known, see US-A-3,913,197.

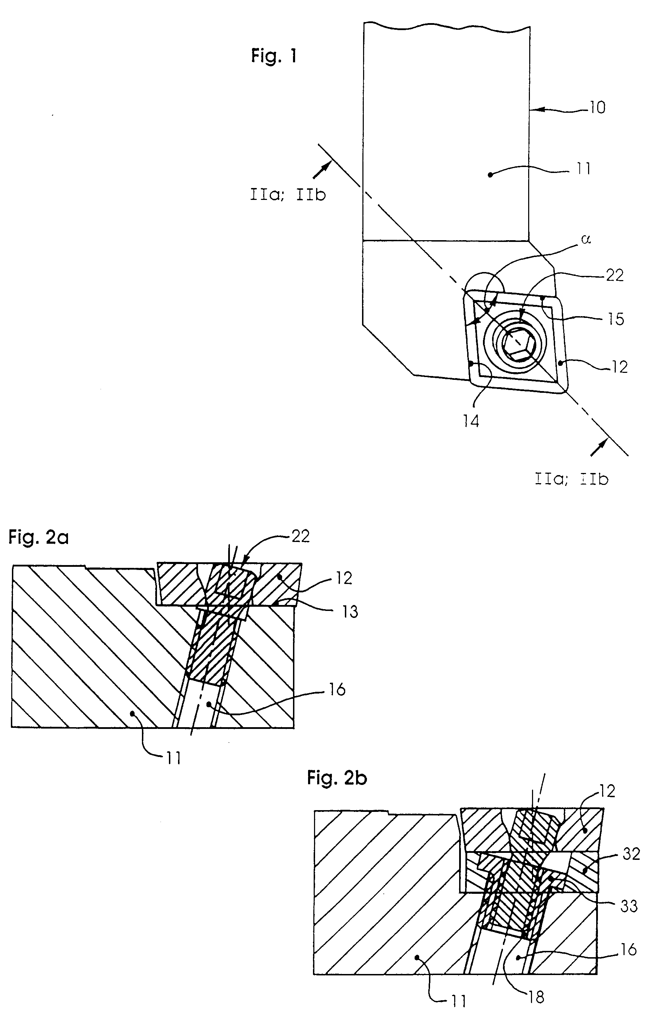

In the arrangement shown in US-A-3,740,807 the cutting insert has a cylindrical hole and the portions of the locking screw that engage said hole are frusto-conical with a decreasing cross-section in direction towards the free end of the head of the locking screw. By studying e.g. Fig.2 of US-A-3,740,807 one easily realizes that a lifting force upon the cutting insert is counter-acted only by friction forces between the locking screw and the hole of the cutting insert.

In the arrangement shown in US-A-3,913,197 the cutting insert has a hole including two frusto-conical sections converging at the centre of the insert. The locking screw is generally of the same design as the locking screw of US-A-3,740,807. However, when the locking screw engages the upper frusto-conical section of the hole of the cutting insert a locking against lifting forces will be present.

The present invention is primarily related to a cutting tool including a cutting insert having a fixing hole according to ISO 6987 or a similar design. However, a locking screw according to US-A-3,740,807 or US-A-3,913,197 will not work in combination with a hole according to ISO 6987 due to the fact that the upper contact portion of the locking screw is frusto-conical with a decreasing cross-section towards the free end of the head of the locking screw.

The aim of the present invention is to present a cutting tool having a simple but reliable locking arrangement for a cutting insert having a hole according to ISO 6987 or a similar design. This aim is realized by a cutting tool that is given the characteristics of the appending claims.

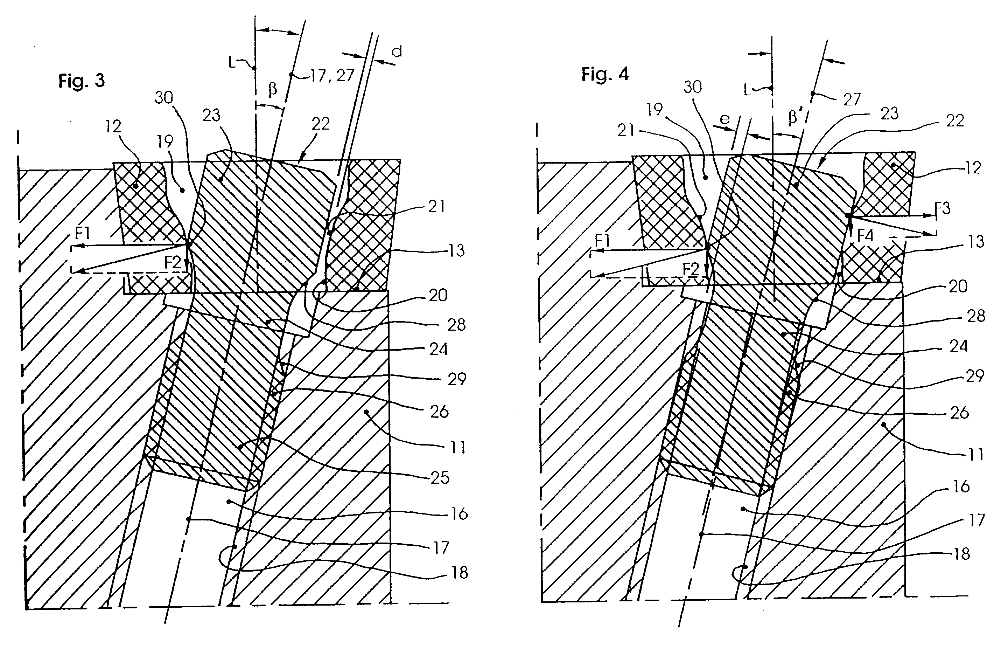

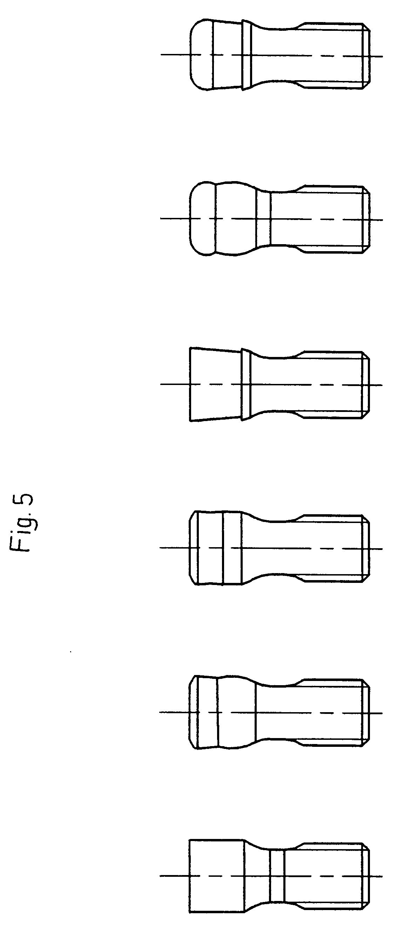

Below embodiments of the cutting tool according to the present invention will be described, reference being made to the accompanying drawings where Fig.1 shows a top view of a cutting tool according to the present invention; Fig.2a shows a section along IIa-IIa in Fig.1; Fig.2b shows a section of an alternative embodiment along IIb-IIb in Fig.1; Fig.3 shows in section a detail of the cutting tool according to Fig.2a in an initial state of clamping the cutting insert to the holder body; Fig.4 shows in section a detail of the cutting tool according to Fig.2a in a final state of clamping the cutting insert to the holder body; and Fig.5 shows in exemplifying purpose a number of alternative embodiments of the head of the locking screw.

The cutting tool 10 in Fig.1 includes a holder body 11 that at one end part is provided with a cutting insert receiving site. In the cutting insert receiving site a cutting insert 12 is located.

In the embodiment according to Figs.2a, 3 and 4 the cutting insert receiving site includes a base surface 13 supporting the cutting insert 12. The cutting insert receiving site has also side support means for the cutting insert, and as is shown in Fig.1 said side support means includes two side surfaces 14 and 15 extending in a transverse direction relative to the base surface 13. The side surfaces 14 and 15 also between them include an angle α, said angle mating with the cutting insert 12 located in the cutting insert receiving site. Normally the angle α is in the interval of 35° - 160°.

In the holder body 11 a hole 16 is provided, said hole 16 emerging in the base surface 13 of the cutting insert receiving site. In the disclosed embodiment the hole 16 has a circular cross-section and the longitudinal centre axis 17 of the hole 16 is inclined relative to the base surface 13 of the cutting insert receiving site. The inclination of the longitudinal centre axis 17 of the hole 16 is such that said axis 17 diverges outwardly away from the side surfaces 14, 15 as said axis 17 progresses upwardly. An angle β is included between the axis 17 and an intersecting line L extending perpendicular to the base surface 13. The angle β is in the interval of 5° - 30°, preferably in the magnitude of 20°. The hole 16 is provided with an internal thread 18.

The cutting insert 12 has a fixing hole 19 that at least partly in axial direction, i.e. at the areas of contact between the locking screw 22 and the cutting insert 12, has a decreasing cross-sectional area towards the base surface 13 in mounted position of the cutting insert 12. Preferably the fixing hole 19 is designed in accordance with ISO 6987, i.e. the design shown in the attached Figs.2a, 2b, 3 and 4 of the present application. A fixing hole 19 in accordance with ISO 6987 has a cylindrical portion 20 located closest to the base surface 13 in mounted position of the cutting insert 12. Above said cylindrical portion 20 the fixing hole 19 has portion 21 decreasing in cross-sectional area towards said cylindrical portion 20 of the fixing hole 19. In the shown embodiment the profile of the wall of the portion 21 is smoothly curved.

A locking screw 22 is adapted to clamp the cutting insert 12 in the cutting insert receiving site of the holder body 11 of the cutting tool 10 according to the present invention. In the shown embodiment the locking screw 22 includes a cylindrical head 23, an intermediate portion 24 and a cylindrical shaft 25 that is provided with an external thread 26. The longitudinal centre axis of the locking screw 22 is designated 27. The thread 26 is dimensioned so as to cooperate with the internal thread 18 of the hole 16. Preferably there is a limited transverse clearance between the respective tips and roots of the threads 18 and 26. This means that until tightened the locking screw 22 may float laterally a limited distance.

In the shown embodiment the intermediate portion 24 has a smaller diameter than both the head 23 and the shaft 25. A first transition portion 28 extends between the head 23 and the intermediate portion 24 and a second transition portion 29 extends between the shaft 25 and the intermediate portion 24. Said transition portions 28, 29 are smoothly curved in the shown embodiment. However, within the scope of the invention other designs are also possible, said transition portions 28, 29 may e.g. be frusto-conical.

An intersecting portion between the cylindrical head 23 and the first transition portion 28 is of a relatively sharp design, said intersecting portion will be active in the clamping of the cutting insert 12. Below, said intersecting portion will be called a lower contact portion 30 of the head 23.

In Fig.4 a distance in a plane through the centre axis 27 of the locking screw 22 and the lower contact portion 30 is designated e. Said distance e is defined by two lines parallel with the centre axis 27, one line extending through the lower contact portion 30 and the other line extending through the intersection between the inner part of the lower end of the hole 19 and the base surface 13. It is at once understood that the distance e > 0 since otherwise the head 23 of the locking screw 22 will slide through the hole 19 when displaced axially downwards.

With reference to Figs.3 and 4 the clamping function of the cutting tool 10 according to the present invention will be described below.

A basic idea of the present invention is that the cutting insert can be mounted/removed without removing the locking screw 22 from the holder body 11. In fact only a limited axial displacement of the locking screw 22 is needed to allow the cutting insert 12 to be mounted/removed.
When a cutting insert 12 is mounted/removed the locking screw 22 is displaced further axially upwards than the state shown in Fig.3. However, it is only needed to displace the locking screw 22 axially upwards so much that the cutting insert 12 can pass between the side supporting means, i.e. the side walls 14, 15, and the lower contact portion 30 of the head 23 of the locking screw 22.

When a cutting insert 12 is clamped in the cutting insert receiving site the locking screw 22 is rotated in a given direction. By cooperation of the internal and external threads 18 and 26 resp. a displacement axially downwards of the locking screw 22 will take place. In Fig.3 the locking screw 22 is shown in a state where the lower contact portion 30 just has entered into contact with the decreasing portion 21 of the fixing hole 19. In this state the longitudinal centre axis 27 of the locking screw 22 coincides with the longitudinal centre axis 17 of the hole 16. Fig.3 shows the forces F₁, F₂ that the first contact portion 30 excerts upon the cutting insert 12 thus forcing the inner (left in Fig.3) portion of the cutting insert 12 towards the side supporting means by the force F₁ and towards the base surface 13 by the force F₂. Between the outer portion of the fixing hole 19 and the head 23 there is, in this state, a small gap d, said gap d being in the interval of 0 - 1.0 mm, preferably in the interval of 0 - 0.5 mm. According to a preferred embodiment of the invention the gap d is in the magnitude of 0.2 mm.

A further displacement axially downwards of the locking screw 22, said displacement being effected by rotation of the locking screw 22 in a given direction, will bring the cutting tool 10 to the state shown in Fig.4. Said further displacement axially downwards will cause the locking screw 22 to tilt outwards, i.e. from the intersection between the side walls 14, 15. Normally said tilting is due to the transverse clearance between the threads 18 and 26 but within the scope of the present invention said tilting can also include an elastic deformation of the locking screw 22.

When said tilting has taken place, see Fig.4, the longitudinal centre axis 27 of the locking screw 22 will no longer coincide with the longitudinal centre axis 17 of the hole 16. This also means that the angle β′ included between the intersecting line L and the longitudinal centre axis 27 of the locking screw 22 in Fig.4 is bigger than the angle β in Fig.3. Normally said angle increase is in the magnitude of 2°.

The clamping effect of said tilting of the locking screw 22 is that an upper contact portion 31 of the cylindrical head 23 of the locking screw 22 contacts the decreasing portion 21 of the fixing hole 19 of the cutting insert 12, said contact portion 31 being on an opposite side of the head 23 of the locking screw 22 compared to the lower contact portion 30. As is shown in Fig.4 the cylindrical head 23 excerts a force F₃ upon the cutting insert 12 in an outward direction and a force F₄ upon the cutting insert in a downward direction. It is easily understood that the force F₃ must be smaller than the force F₁. The presence of the force F₄ is very important in that said force prevents a raising of the outer cutting corner of the cutting insert 12 from the base surface 13.

In the shown embodiment the head 23 of the locking screw 22 is cylindrical, i.e. said head 23 has a constant radial extension relative to its longitudinal centre axis 27. However, within the scope of the present invention it is also possible that the head of the locking screw at the area of its upper contact portion 31 has a widening cross-section in direction upwards, i.e. towards the free end of the head of the locking screw. In exemplifying but not limiting purpose reference is made to Fig.5. From said figure it is at once realized that the shape of the head can be varied in many different ways within the scope of the present invention. However, in the area of the upper contact portion 31 the head must either be cylindrical or have a widening cross-section in direction towards the free end of the head 23 of the locking screw 22.

In this connection it should also be pointed out that said lower contact portion 30 does not need to be of a sharp design. As exemplified in Fig.5 other designs are possible within the scope of the present invention as long as a good contact surface is established between the lower contact portion 30 and the hole 19 of the cutting insert 12.

The embodiment shown in Fig.2b corresponds to the embodiment described in Figs.1, 2a, 3 and 4 with the following differences. A shim 32 is located between the cutting insert 12 and the cutting insert receiving site. Said shim 32 is fixed to the holder body 11 by means of an externally and internally threaded sleeve 33 that is mounted in an internally threaded hole 16′. The internal thread 18′ of the sleeve 33 functions in a way corresponding to the upper portion of the internal thread 18 of the hole 16.

In the described embodiments the locking pin is in the shape of a locking screw. However, within the scope of the present invention it is also possible that the locking pin is of a non-rotating type, i.e. the locking pin is displaceable in an axial direction without being rotated.

The present invention is primarily intended to be used in connection with cutting inserts having positive basic shape. However, the principles of the invention can also be used in connection with cutting inserts having negative basic shape.

Also in other respects the invention can be varied freely within the scope of the appending claims.

## Claims

1. Cutting tool (10) for chip removing machining, said cutting tool (10) including a holder body (11) with a cutting insert receiving site including a base surface (13) and side supporting means (14,15), a cutting insert (12) located in said cutting insert receiving site and supported by said base surface (13) and said side supporting means (14,15), a locking pin (22), means (16,18,25,26;33,18',25,26) for detachably connecting the locking pin to the holder body (11) in the area of the cutting insert receiving site, said means (16,18,25,26;33,18',25,26) allowing axial displacement of the locking pin (22) relative to the holder body (11), said locking pin (22) having a longitudinal centre axis (27) diverging away from said side supporting means (14,15) as it progresses upwardly, said cutting insert (12) having a fixing hole (19) extending through the insert (12), said locking pin (22) having a head (23), the design of said head (23) and said fixing hole (19) and the inclination of the longitudinal centre axis (27) being so mutually adapted to each other that, in an active position of the locking pin (22), a lower contact portion (30) of said head (23) engages the inner portion of the fixing hole (19) and an upper contact portion (31) of said head (23) engages the outer portion of the fixing hole (19), said contact portions being located on opposite sides of the head (23) of the locking pin (22), and that in an inactive position of the locking pin (22), i.e. the locking pin (22) being displaced axially away from the base surface (13) a limited distance, the cutting insert (12) can be mounted in/removed from the cutting insert receiving site, the fixing hole (19) having, at least in the areas of contact between the locking pin (22) and the cutting insert (12), a decreasing cross-sectional area in direction towards the base surface (13) in mounted position of the cutting insert (12) in the cutting insert receiving site,
**characterized** in that the portion of the fixing hole (19) having a decreasing cross-sectional area is provided with a smothly curved wall profile, and that the head (23) of the locking pin (22) in the area of its upper contact portion (31) has a substantially constant radial extension relative to its longitudinal centre axis (27) or a radial extension relative to its longitudinal centre axis (27), said radial extension increasing towards the free end of the head (23).

2. Cutting tool (10) according to claim 1, wherein the locking pin is in the shape of a locking screw (22) having a symmetrical design relative to its longitudinal centre axis (27), said locking screw (22) including a shaft (25) having an external thread (26), and the means for detachably anchoring the locking pin to the holder body (11) and allow axial displacement of said locking pin relative to said holder body (11) being in the shape of a hole (16) having a circular cross-section and an internal thread (18) adapted to engage said external thread (26) of the locking screw (22), said hole (16) having a longitudinal centre axis (17) deverging away from the side supporting means (14,15) as it progresses upwards,
**characterized** in that the head (23) of the locking screw (22) is cylindrical or that the head (23) has a cross-section increasing towards the free end of the head (23).

3. Cutting tool (10) according to claim 2,
**characterized** in that there is a transverse clearance between the internal thread (18) of the hole (16) and the external thread (26) of the locking screw (22).

4. Cutting tool according to any of the preceding claims,
**characterized** in that the locking pin (22) has an intermediate portion (24) having a smaller cross-sectional area than the head (23), that a first transition portion (28) is located between the intermediate portion (24) and the head (23), that the intersection between the first transition portion (28) and the head (23) constitutes the lower contact portion (30) of the head (23).

5. Cutting tool according to any of the preceding claims,
**characterized** in that in its clamping state the locking pin (22) is in a bent state due to an elastic deformation of said locking pin (22).

6. Cutting tool according to any of the preceding claims, wherein an angle (β) is included between a longitudinal centre axis (17) of the fixing hole (16) and a line (L) extending perpendicular to the base surface (13),
**characterized** in that the angle (β) is in the interval of 5° - 30°.

7. Cutting tool according to claim 6,
**characterized** in that the angle (β) preferably is in the order of 20°.

## Patentansprüche

1. Schneidwerkzeug (10) zum spanabhebenden Bearbeiten, wobei des Schneidwerkzeug (10) einen Haltekörper (11) mit einer den Schneideinsatz aufnehmenden Stelle aufweist, mit einer Basisoberfläche (13) und Seitenstützmitteln (14, 15), einen Schneideinsatz (12) aufweist, der in der den Schneideinsatz aufnehmenden Stelle angeordnet ist und durch die Basisoberfläche (13) und die Seitenstützmittel (14, 15) gestützt wird, einen Sperrstift (22) aufweist, Mittel (16, 18, 25, 26; 33, 18', 25, 26), um den Sperrstift lösbar mit dem Haltekörper (11) in der Fläche der den Schneideinsatz aufnehmenden Stelle zu verbinden, wobei die Mittel (16, 18, 25, 26; 33, 18', 25, 26) die axiale Verschiebung des Sperrstiftes (22) bezüglich des Haltekörpers (11) erlauben, wobei der Sperrstift (22) eine Längszentralachse (27) hat, die von den Seitenunterstützungsmitteln (14, 15) wegdivergiert, wenn sie sich nach oben vorwärts bewegt, wobei der Schneideinsatz (12) ein Fixierloch (19) hat, welches sich durch den Einsatz (12) erstreckt, wobei der Sperrstift (22) einen Kopf (23) hat, wobei der Aufbau des Kopfes (23) und das Fixierloch (19) und die Neigung der Längszentralachse (27) gegenseitig so angepaßt sind, daß in einer aktiven Position des Sperrstiftes (22) ein unterer Kontaktteil (30) des Kopfes (23) mit dem inneren Teil des Fixierloches (19) in Eingriff kommt und ein oberer Kontaktteil (31) des Kopfes (23) mit dem äußeren Teil des Fixierloches (19) in Eingriff kommt, wobei die Kontaktteile an entgegengesetzten Seiten des Kopfes (23) des Sperrstiftes (22) angeordnet sind, und daß in einer inaktiven Position des Sperrstiftes (22), d.h. wenn der Sperrstift (22) axial von der Basisoberfläche (13) um einen begrenzten Abstand verschoben wird, der Schneideinsatz (12) in der den Schneideinsatz aufnehmenden Stelle befestigt werden/von dieser entfernt werden kann, wobei das Fixierloch (19) mindestens in den Kontaktflächen zwischen dem Sperrstift (22) und dem Schneideinsatz (12) eine abnehmende Querschnittsfläche in Richtung gegen die Basisoberfläche (13) hat, wenn sich der Schneideinsatz (12) in befestigter Position in der den Schneideinsatz aufnehmenden Stelle befindet, dadurch gekennzeichnet, daß der Teil des Fixierloches (19), der eine abnehmende Querschnittsfläche hat, mit einem leicht gekrümmten Wandprofil versehen ist, und daß der Kopf (23) des Sperrstiftes (22) in der Fläche seines oberen Kontaktteiles (31) eine im wesentlichen konstante radiale Ausdehnung bezüglich seiner Längszentralachse (27) hat oder eine radiale Ausdehnung bezüglich seiner Längszentralachse (27) hat, wobei die radiale Ausdehnung gegen das freie Ende des Kopfes (23) hin anwächst.

2. Schneidwerkzeug (10) nach Anspruch 1, wobei der Sperrstift die Gestalt einer Sperrschraube (22) hat, welche bezüglich ihrer Längszentralachse (27) einen symmetrischen Aufbau hat, wobei die Sperrschraube (22) einen Schaft (25) mit einem Außengewinde (26) aufweist, und die Mittel zum lösbaren Verankern des Sperrstiftes mit dem Haltekörper (11), welche axiales Verschieben des Sperrstiftes bezüglich des Haltekörpers (11) erlauben, die Gestalt eines Loches (16) mit einem kreisförmigen Querschnitt und einem Innengewinde (18) haben, welches geeignet ist, mit dem Außengewinde (26) der Sperrschraube (22) in Eingriff zu kommen, wobei das Loch (16) eine Längszentralachse (17) hat, die von den Seitenstützmitteln (14, 15) wegdivergiert, wenn sie sich nach oben fortbewegt, dadurch gekennzeichnet, daß der Kopf (23) der Sperrschraube (22) zylindrisch ist oder daß der Kopf (23) einen Querschnitt hat, der gegen das freie Ende des Kopfes (23) hin anwächst.

3. Schneidwerkzeug (10) nach Anspruch 2, dadurch gekennzeichnet, daß zwischen dem Innengewinde (18) des Loches (16) und dem Außengewinde (26) der Sperrschraube (22) ein Querspiel besteht.

4. Schneidwerkzeug nach einem der vorhergehenden Ansprüche, dadurch gekennzeichnet, daß der Sperrstift (22) einen Zwischenteil (24) hat, der eine kleinere Querschnittsfläche besitzt als der Kopf (23), daß ein erster Übergangsteil (28) zwischen dem Zwischenteil (24) und dem Kopf (23) angeordnet ist, daß der Schnittpunkt zwischen dem ersten Übergangsteil (28) und dem Kopf (23) den unteren Kontaktteil (30) des Kopfes (23) bildet.

5. Schneidwerkzeug nach einem der vorhergehenden Ansprüche, dadurch gekennzeichnet, daß sich der Sperrstift (22) in seinem geklemmten Zustand in einem gebogenen Zustand aufgrund einer elastischen Verformung des Sperrstiftes (22) befindet.

6. Schneidwerkzeug nach einem der vorhergehenden Ansprüche, wobei ein Winkel (β) zwischen der Längszentralachse (17) des Fixierloches (16) und einer Linie (L) eingeschlossen ist, die sich senkrecht zu der Basisoberfläche (13) erstreckt, dadurch gekennzeichnet, daß der Winkel (β) in dem Intervall von 5° bis 30° liegt.

7. Schneidwerkzeug nach Anspruch 6, dadurch gekennzeichnet, daß der Winkel (β) vorzugsweise in der Größenordnung von 20° liegt.

## Revendications

1. Outil de coupe (10) pour usinage par enlèvement de métal, ledit outil de coupe (10) comprenant un porte-outil (11) pourvu d'une assise de plaquette comprenant une surface de base (13) et des moyens de support latéraux (14, 15), une plaquette de coupe (12) située dans ladite assise de plaquette et supportée par ladite surface de base (13) et lesdits moyens de support latéraux (14, 15), un goujon de blocage (22), des moyens (16, 18, 25, 26 ; 33, 18', 25, 26) servant à relier de manière amovible le goujon de blocage au porte-outil (11) dans la zone de l'assise de plaquette, lesdits moyens (16, 18, 25, 26 ; 33, 18', 25, 26) permettant un déplacement axial du goujon de blocage (22) par rapport au porte-outil (11), ledit goujon de blocage (22) comportant un axe central longitudinal (27) divergeant en s'écartant desdits moyens de support latéraux (14, 15) à mesure qu'il progresse vers le haut, ladite plaquette de coupe (12) comportant un trou de fixation (19) s'étendant à travers la plaquette (12), ledit goujon de blocage (22) comportant une tête (23), le dessin de ladite tête (23) et dudit trou de fixation (19) ainsi que l'inclinaison de l'axe central longitudinal (27) étant mutuellement adaptés d'une manière telle que, dans une position active du goujon de blocage (22), une partie de contact inférieure (30) de ladite tête (23) est en contact avec la partie intérieure du trou de fixation (19) et qu'une partie de contact supérieure (31) de ladite tête (23) est en contact avec la partie extérieure du trou de fixation (19), lesdites parties de contact étant situées sur des côtés opposés de la tête (23) du goujon de blocage (22) et que, dans une position inactive du goujon de blocage (22), à savoir le goujon de blocage (22) étant déplacé dans le sens axial en s'écartant de la surface de base (23) d'une distance limitée, la plaquette de coupe (12) peut être montée dans l'assise de plaquette et en être déposée, le trou de fixation (19) comportant, au moins dans les zones de contact entre le goujon de blocage (22) et la plaquette de coupe (12), une section transversale décroissante en direction de la surface de base (13) en position montée de la plaquette de coupe (12) dans l'assise de plaquette,
caractérisé en ce que la partie du trou de fixation (19) comportant une section transversale décroissante est pourvue d'un profil de paroi uniformément incurvé et en ce que la tête (23) du goujon de blocage (22) dans la zone de sa partie de contact supérieure (31) comporte un prolongement radial sensiblement constant par rapport à son axe central longitudinal (27) ou un prolongement radial par rapport à son axe central longitudinal (27), ledit prolongement radial augmentant en direction de l'extrémité libre de la tête (23).

2. Outil de coupe (10) selon la revendication 1, dans lequel le goujon de blocage prend la forme d'une vis de blocage (22) présentant une construction symétrique par rapport à son axe central longitudinal (27), ladite vis de blocage (22) comprenant une tige (25) munie d'un filetage extérieur (26) et le moyen servant à fixer le goujon de blocage d'une manière amovible au porte-outil (11) et à autoriser un déplacement axial dudit goujon de blocage par rapport audit porte-outil (11) prenant la forme d'un trou (16) comportant une section transversale circulaire et un filetage intérieur (18) prévu pour coopérer avec ledit filetage intérieur (26) de la vis de blocage (22), ledit trou (16) comportant un axe central longitudinal (17) divergeant en s'écartant des moyens de support latéraux (14, 15) à mesure qu'il progresse vers le haut,
caractérisé en ce que la tête (23) de la vis de blocage (22) est cylindrique ou en ce que la tête (23) comporte une section transversale augmentant en direction de l'extrémité libre de la tête (23).

3. Outil de coupe (10) selon la revendication 2,
caractérisé en ce qu'il existe un jeu transversal entre le filetage intérieur (18) du trou (16) et le filetage extérieur (26) de la vis de blocage (22).

4. Outil de coupe selon l'une quelconque des revendications précédentes,
caractérisé en ce que le goujon de blocage (22) comporte une partie intermédiaire (24) comprenant une section transversale plus petite que la tête (23), en ce qu'une première partie de transition (28) est située entre la partie intermédiaire (24) et la tête (23), en ce que l'intersection entre la première partie de transition (28) et la tête (23) constitue la partie de contact inférieure (30) de la tête (23).

5. Outil de coupe selon l'une quelconque des revendications précédentes,
caractérisé en ce que dans son état de serrage par blocage, le goujon de blocage (22) se trouve en un état courbé dû à une déformation élastique dudit goujon de blocage (22).

6. Outil de coupe selon l'une quelconque des revendications précédentes, dans lequel un angle (β) est inclus entre un axe central longitudinal (17) du trou de fixation (16) et une ligne (L) s'étendant perpendiculairement à la surface de base (13),
caractérisé en ce que l'angle (β) est compris dans l'intervalle de 5° à 30°.

7. Outil de coupe selon la revendication 6,
caractérisé en ce que l'angle (β) est de préférence de l'ordre de 20°.
